# EUROPÄISCHE PATENTANMELDUNG

(11) **EP 2 982 605 A1**
(43) Veröffentlichungstag der Anmeldung: **10.02.2016**
(21) Anmeldenummer: 15177196.1
(22) Anmeldetag: 17.07.2015
(51) Int. Cl.: B64F 1/36, B60P 1/43, B60P 1/44, B65G 67/04

(54) **FÖRDERBANDWAGEN**

(30) Priorität: 08.08.2014 DE 202014103696 U
(71) Anmelder: Flughafen Köln/Bonn GmbH, 51147 Köln (DE)
(72) Erfinder: Backhausen, Frank, 51145 Köln (DE); Klauß, Dietmar, 53804 Much (DE)
(74) Vertreter: Stenger Watzke Ring

(57) **Zusammenfassung**

Die Erfindung betrifft einen Förderbandwagen zum Be- und/oder Entladen insbesondere von Luftfahrzeugen auf einem Flugplatzvorfeld, mit einem ersten Motor, insbesondere Verbrennungsmotor, der eine hydraulische oder pneumatische Pumpe antreibt, wobei mittels eines von der Pumpe geförderten Fluids ein hydraulischer oder pneumatischer zweiter Motor für ein Förderband und/oder einen Fahrantrieb des Förderbandwagens antreibbar ist.

## Beschreibung

Die Erfindung betrifft einen Förderbandwagen zum Be- und/oder Entladen insbesondere von Luftfahrzeugen auf einem Flugplatzvorfeld, mit einem ersten Motor, insbesondere Verbrennungsmotor, der eine hydraulische oder pneumatische Pumpe antreibt, wobei mittels eines von der Pumpe geförderten Fluids ein hydraulischer oder pneumatischer zweiter Motor für ein Förderband und/oder einen Fahrantrieb des Förderbandwagens antreibbar ist.

Derartige Förderbandwagen sind aus dem Stand der Technik bekannt. Sie werden insbesondere auf Vorfeldern von Flugplätzen eingesetzt, um die Frachträume von Flugzeugen zu be- und/oder entladen. Es handelt sich hierbei um mobile Fahrzeuge, welche üblicherweise wie ein Kraftfahrzeug zumindest vier Räder, ein Fahrwerk, ein Fahrgestell, eine Fahrerkabine usw. aufweisen.

Ein gattungsgemäßer Förderbandwagen weist ein Förderband auf. Dieses ist üblicherweise verstellbar ausgebildet. Es erstreckt sich üblicherweise zumindest über die gesamte Länge des Förderbandwagens. Der Förderbandwagen kann an ein Flugzeug herangefahren und dabei in eine solche Position gebracht werden, in welcher ein erstes Ende des Förderbands an einer Frachtraumöffnung positioniert wird. Über das Förderband können dann Frachtstücke, insbesondere Gepäckstücke zwischen dem Vorfeld und dem Frachtraum hin- und hertransportiert werden.

Auf dem Vorfeld werden die Frachtstücke, insbesondere Gepäckstücke, bislang manuell zwischen einem Transportfahrzeug und dem Förderband gehandhabt.

Diese manuelle Handhabung ist insofern nachteilig, als die Frachtstücke, insbesondere Gepäckstücke, vergleichsweise schwer und sperrig sind. Die körperliche Belastung für die eine Verladung durchführenden Personen ist daher ganz erheblich. So kommt es oftmals zu Rückenschmerzen und/oder dergleichen.

Vor diesem Hintergrund ist die **Aufgabe** der vorliegenden Erfindung, die Verwendung und Handhabung eines gattungsgemäßen Förderbandwagens zu vereinfachen, insbesondere unter der Maßgabe eines verbesserten Gesundheitsschutzes für die verladenden Personen.

Zur **Lösung** schlägt die Erfindung eine Unterdruckhebevorrichtung vor, wobei eine Unterdruckpumpe der Unterdruckhebevorrichtung ebenfalls durch das von der Pumpe geförderte Fluid antreibbar ist.

Unterdruckhebevorrichtungen sind aus dem Stand der Technik nicht unbekannt. Beispielsweise die EP 1 747 164 B1 offenbart eine solche Vakuumhebevorrichtung. Derartige Vakuumhebevorrichtungen konnten bislang aber nicht wirtschaftlich sinnvoll bei Förderbandwagen eingesetzt werden. Wenngleich die EP 1 747 164 B1 eine Montage auf einem Fahrzeug grundsätzlich vorschlägt, scheiterte dies in der Vergangenheit an dem zum Betrieb der Vakuumhebevorrichtung erforderlichen Antrieb. So war es bisher Usus, dass die für den Betrieb der Vakuumhebevorrichtung erforderliche Unterdruckquelle durch einen Kompressor realisiert worden ist, welcher von einem Elektromotor angetrieben werden muss. Dies hat im Falle eines gattungsgemäßen Förderbandwagens jedoch den Nachteil, dass derartige Antriebselemente sowie entsprechende Energiespeicher für den Betrieb der Vakuumhebevorrichtung zusätzlich von dem Förderbandwagen transportiert werden müssen. Je nach verwendetem Antriebsmotor musste zudem vorgesehen sein, dass zusätzliche Betriebsstoffe wie Diesel, Benzin oder Gas mitgeführt werden müssen.

Unterdruckvorrichtungen sind Vorrichtungen, die einen Unterdruck erzeugen, durch welchen eine Masse durch Saugkraft gehalten werden kann. Unterdruck meint einen Druck, der geringer ist als der atmosphärische Druck. Es kann sich insbesondere um eine Vakuumhebevorrichtung beziehungsweise Vakuumpumpe handeln.

Der Verwendung von Unterdruckhebevorrichtungen bei Förderbandwagen stand also bisher sowohl der wirtschaftliche und gerätetechnische Aufwand, insbesondere in Verbindung mit den Antriebskomponenten, als auch Sicherheitsprobleme im Zusammenhang mit den zusätzlichen Betriebsstoffen bei der Verwendung auf Flugplätzen und/oder dergleichen entgegen.

Die Erfindung schafft hier erstmals Abhilfe. Erfindungsgemäß ist nämlich vorgesehen, dass die Unterdruckhebevorrichtung ebenfalls durch das von der hydraulischen oder pneumatischen Pumpe geförderte Fluid antreibbar ist. Diese Pumpe ist ohnehin vorgesehen, da sie für den Antrieb des Motors für das Förderband erforderlich ist. Außerdem kann eine solche Pumpe bzw. das von ihr geförderte Fluid noch für zahlreiche weitere Komponenten des Förderbandwagens verwendet werden, beispielsweise für den Betrieb einer Bremsanlage, eines Lenkkraftverstärkers sowie für den Fahrantrieb des Förderbandwagens selbst. Für den letztgenannten Anwendungsfall sind am Förderbandwagen hydraulische oder pneumatische Radnabenmotoren vorgesehen.

Die erfindungsgemäße Lösung ist keineswegs trivial. So besteht eine Schwierigkeit darin, das von der Pumpe geförderte Fluid zielgerichtet und in einem vorbestimmten Verhältnis auf die einzelnen Verbraucher aufteilen zu können. Hierbei ist zudem zu beachten, dass die einzelnen Verbraucher teilweise ganz unterschiedliche Fluidströme, das heißt Antriebsgeschwindigkeiten benötigen. Die Erfindung schlägt hier erstmals eine technische Lösung vor, um das zuvor beschriebene Prinzip zu realisieren.

Mit der Erfindung sind zahlreiche vorteilhafte Wirkungen verbunden. So kann auf eigene Antriebselemente für die Unterdruckhebevorrichtung fast vollständig verzichtet werden. Insbesondere kann auf den aus dem Stand der Technik bekannten Elektromotor verzichtet werden. Außerdem ist es nicht erforderlich, auf einem erfindungsgemäßen Förderbandwagen zusätzliche Betriebsstoffe zu lagern und einzusetzen. Es ist lediglich der Betriebsstoff zum Betrieb des ersten Motors erforderlich. Hierbei kann es sich um einen Verbrennungsmotor handeln, welcher beispielsweise mit Gas betrieben ist.

Der erfindungsgemäße Förderbandwagen lässt sich auf wirtschaftliche Art und Weise realisieren. Außerdem ist die beispielsweise beim Betrieb auf Flugplätzen erforderliche Sicherheit jederzeit gewährleistet, da keine zusätzlichen, gefährlichen Betriebsstoffe verwendet werden müssen.

Insofern wird mit der Erfindung eine Möglichkeit geschaffen, sehr wirtschaftlich und betriebssicher einen Förderbandwagen bereitzustellen, mit welchem die Handhabung, insbesondere der Transport von Frachtstücken vom Förderband für den Verwender sehr gesundheitsschonend durchgeführt werden kann.

Gemäß einer vorteilhaften Weiterbildung der Erfindung sind sowohl der zweite Motor als auch der Fahrantrieb des Förderbandwagens durch das von der Pumpe geförderte Fluid antreibbar. Bei dem Fahrantrieb handelt es sich um die zuvor bereits erwähnten hydraulischen oder pneumatischen Motoren, welche die Räder des Förderbandwagens antreiben. Es kann sich hierbei beispielsweise um entsprechende Radnabenmotoren handeln. Es kann vorgesehen sein, dass das von der Pumpe geförderte Fluid ausschließlich alternativ zum Antrieb des zweiten Motors und der Unterdruckpumpe einerseits oder des Fahrantriebs andererseits umgeleitet wird.

Gemäß einer vorteilhaften Weiterbildung der Erfindung sind der Fahrantrieb und die Unterdruckpumpe nur alternativ durch das von der Pumpe geförderte Fluid antreibbar. Sowohl der Fahrantrieb als auch die Unterdruckpumpe erfordern vergleichsweise große Leistungen zum Betrieb. Erfindungsgemäß ist vorgesehen, dass beide Einrichtungen nur alternativ betreibbar sind. Dadurch kann sichergestellt werden, dass immer ausreichend Leistung zur Verfügung steht. Außerdem verbessert diese Weiterbildung die Sicherheit des Förderbandwagens. Bei einem Betrieb der Unterdruckhebevorrichtung soll der Förderbandwagen bestimmungsgemäß ortsfest stehen, damit eine definierte Verbindung zwischen dem Frachtraum eines Luftfahrzeugs einerseits und einem Transportmittel für die Frachtstücke andererseits gegeben ist. Insofern kann durch diese Weiterbildung aus technischer Sicht ausgeschlossen werden, dass sich der Fahrantrieb des Förderbandwagens beim Betrieb der Unterdruckhebevorrichtung ungewollt in Bewegung setzt.

Der alternative Betrieb des Fahrantriebs und der Unterdruckpumpe kann beispielsweise durch ein Mehrwegeventil, insbesondere Zweiwegeventil realisiert werden. Dieses verbindet entweder den Fahrantrieb oder aber die Unterdruckpumpe fluidtechnisch mit der Pumpe. Das Mehrwegeventil kann hydraulisch oder pneumatisch betätigbar sein. Es kann insbesondere in beiden Schaltrichtungen hydraulisch oder pneumatisch betätigt werden. Dies bedeutet, dass das Mehrwegeventil in einer Betätigungsrichtung nicht nur aufgrund der Rückstellkraft einer Feder, sondern tatsächlich aktiv durch das hydraulische oder pneumatische Fluid geschaltet wird.

Gemäß einer vorteilhaften Weiterbildung der Erfindung ist die hydraulische oder pneumatische Beaufschlagung des Mehrwegeventils durch ein elektrisch betätigbares Mehrwegeventil, insbesondere Zweiwegeventil, betätigbar. Hierdurch wird eine zusätzliche Sicherheitsstufe geschaffen. Dadurch kann der Betrieb des Förderbandwagens noch sicherer ablaufen.

Gemäß einer vorteilhaften Weiterbildung der Erfindung ist die Drehzahl der Pumpe je nach anzutreibender Einrichtung insbesondere automatisiert erhöhbar oder verringerbar. Somit können mit ein und derselben Pumpe auch solche Einrichtungen betrieben werden, deren Solldrehzahlen sich deutlich voneinander unterscheiden. Vorzugsweise erfolgt die Drehzahlanpassung automatisiert. Dies bedeutet, dass bei einem Umschalten zwischen einem Antrieb der einen oder der anderen Einrichtung die Drehzahl nicht manuell eingestellt werden muss, sondern vielmehr steuerungsseitig automatisch auf einen vorbestimmten Wert eingestellt wird.

Gemäß einer vorteilhaften Weiterbildung der Erfindung ist die Unterdruckhebevorrichtung an einem Fahrgestell angeordnet. Alternativ könnte die Unterdruckhebevorrichtung auch unmittelbar am Förderband angeordnet sein. Die Unterdruckhebevorrichtung kann insbesondere an einem am Fahrgestell befestigten Kragarm angeordnet sein. Der Kragarm kann stirnseitig, insbesondere an eine sich vertikal erstreckende Fläche, des Fahrgestells angeflanscht sein. Dieser Kragarm kann sich vom Fahrgestell ausgehend horizontal erstrecken. Mittels des Kragarms kann die Unterdruckhebevorrichtung in einem solchen Abstand zum Fahrgestell angeordnet werden, welcher einen möglichen Abstand des Förderbands vom Fahrgestell entspricht. Somit kann die Unterdruckhebevorrichtung genau dort angeordnet sein, wo sie beim Betrieb des Förderbandwagens, das heißt beim Beladen von Frachtstücken auch gebraucht wird.

Die Unterdruckhebevorrichtung kann einen Schlauch umfassen, wobei der Schlauch an einem freien Ende ein Mittel zum Anheben einer Last, insbesondere eines Frachtstück aufweist. Das Mittel kann als Saugglocke ausgebildet sein. Das Mittel kann kraftschlüssig, das heißt durch Unterdruck, mit der Last gekoppelt werden. Die Unterdruckhebevorrichtung und der Schlauch können ausgebildet sein wie die Saugschlauchhebevorrichtung gemäß der EP 1 747 164 B1. Es kann sich insbesondere um eine Saugschlauchhebevorrichtung gemäß Fig. 1 dieses Patents handeln. Die Offenbarung der Saugschlauchhebevorrichtung gemäß der EP 1 747 164 B1 wird daher in die Lehre der vorliegenden Anmeldung mit einbezogen.

Der Schlauch kann an einem Galgen angeordnet sein. Dadurch kann sichergestellt werden, dass der Schlauch immer von oben in den Arbeitsbereich einer Gepäckstücke verladenden Person hineinhängt. Dies hat den Vorteil, dass die Unterdruckhebevorrichtung bzw. der Schlauch nicht stört, gleichzeitig jedoch jederzeit einfach gegriffen und zur Handhabung von Frachtstücken verwendet werden kann. Die Handhabung ist ebenfalls in der EP 1 747 164 B1 beschrieben. Insofern wird die dortige Offenbarung in dieser Anmeldung mit eingebunden. So können die Frachtstücke mit der Unterdruckhebevorrichtung durch Aufsetzen und Erzeugen eines Unterdrucks gekoppelt werden, anschließend an der Unterdruckhebevorrichtung hängend transportiert werden und daran anschließend durch Aufheben des Unterdrucks, insbesondere Vakuums wieder von der Unterdruckhebevorrichtung entkoppelt werden.

Die Erfindung betrifft alternativ eine mobile Arbeitsplattform zur Handhabung von Frachtstücken insbesondere zum Beladen und/oder zur Entnahme von Frachtstücken auf ein bzw. von einem Förderband auf einem Flugplatzvorfeld, mit einem ersten Motor zum Verfahren der Arbeitsplattform, insbesondere Verbrennungsmotor, und einer Unterdruckhebevorrichtung. Die Arbeitsplattform kann Räder, ein Fahrwerk, ein Chassis, einen Aufbau, eine Fahrerkabine und/oder dergleichen aufweisen. Die Besonderheit besteht darin, dass eine Unterdruckpumpe der Unterdruckhebevorrichtung ebenfalls durch den ersten Motor antreibbar ist. Es kann also ganz allgemein auf einen eigenen Motor mit eigenen Betriebsstoffen zum Antrieb der Unterdruckhebevorrichtung verzichtet werden. Beispielsweise kann der erste Motor einen Generator antreiben, weicher die Bewegungsenergie des Motors in elektrische Energie zum Betrieb der Unterdruckpumpe wandelt. Alternativ kann die Bewegungsenergie des ersten Motors unmittelbar zum Antrieb der Unterdruckpumpe genutzt werden, gegebenenfalls unter Zwischenordnung eines Übersetzungsgetriebes. Die Erfindung ist folglich nicht auf Förderbandwagen beschränkt. Die Arbeitsplattform kann bis auf die Tatsache, dass sie kein Förderband umfasst, die Merkmale eines Förderbandwagens aufweisen. Eine zuvor beschriebene Arbeitsplattform kann beispielsweise unabhängig von einem Förderbandwagen gehandhabt und verfahren werden. Allerdings können beide Fahrzeuge zum Be- oder Entladen nebeneinander positioniert werden und anschließend in Kombination verwendet werden.

Weitere Vorteile und Merkmale ergeben sich anhand der nachfolgenden Figurenbeschreibung. Es zeigen:
Fig. 1 eine Seitenansicht einer Ausführungsform eines erfindungsgemäßen Förderbandwagens;
Fig. 2 eine Draufsicht auf den Förderbandwagen gemäß Fig. 1;
Fig. 3 eine Schnittansicht auf den Förderbandwagen gemäß Fig. 2 entlang der Linie III-III;
Fig. 4 eine Heckansicht des Förderbandwagens gemäß Fig. 1 entlang der Linie IV-IV; und
Fig. 5 ein Hydraulikplan des Förderbandwagens gemäß den Fign. 1 bis 4.

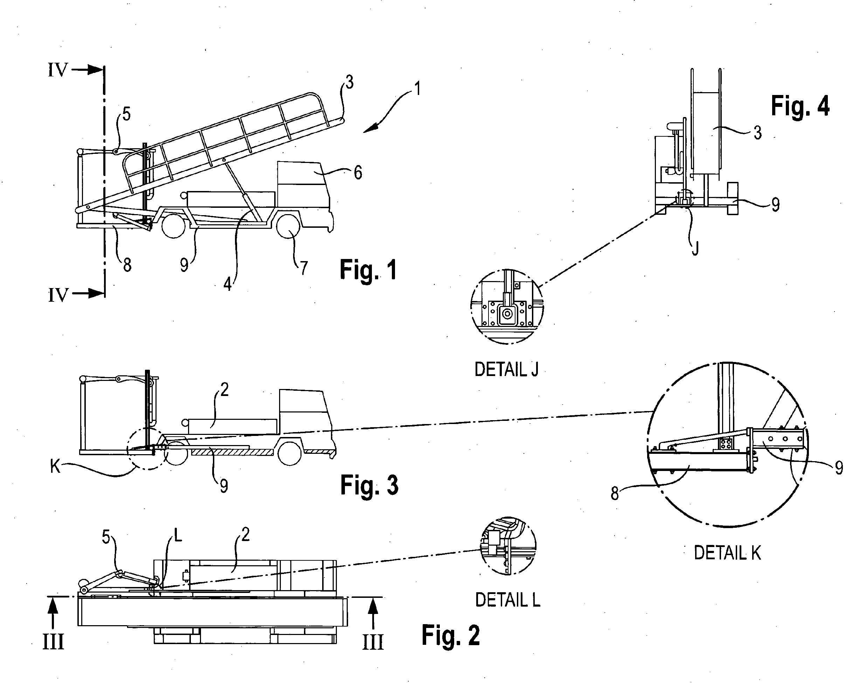

Die Figuren 1 bis 4 zeigen eine Ausführungsform eines erfindungsgemäßen Förderbandwagens 1. Es sind verschiedene (Schnitt-) Ansichten gezeigt, welche im Folgenden zusammenhängend beschrieben werden.

Der Förderbandwagen 1 umfasst ein Fahrgestell 9 mit einem Fahrwerk umfassend Räder 7. Das Fahrgestell 9 trägt eine Fahrerkabine 6. Der Förderbandwagen 1 kann somit nach der Art eines Kraftfahrzeugs bewegt werden.

Der Förderbandwagen 1 umfasst ein Förderband 3. Dieses erstreckt sich über die gesamte Länge des Fahrgestells 9 und darüber hinaus. Das Förderband 3 kann relativ zum Fahrgestell 9 verschwenkt werden. Hierzu dient eine Hubeinrichtung 4. Der Förderbandwagen 1 kann im Betrieb derart positioniert werden, dass ein vorderes Ende des Förderbands 3 unmittelbar im Bereich einer Frachtraumöffnung eines Luftfahrzeugs angeordnet wird. Das hintere Ende ist in Bodennähe angeordnet, so dass eine für das Verladen zuständige Person Frachtstücke vom Förderband 3 entnehmen bzw. Frachtstücke auf das Förderband 3 aufstellen kann.

Die Besonderheit besteht nun darin, dass eine Vakuumhebevorrichtung 5 vorgesehen ist. Diese ist an einem Kragarm 8 befestigt. Der Kragarm 8 ist wiederum am Fahrgestell 9 befestigt. Durch den Kragarm 8 kann die Vakuumhebevorrichtung 5 in einer solchen Position angeordnet werden, dass am hinteren Ende des Förderbands 3 damit gearbeitet werden kann. Die Verwendung des Kragarms 8 hat darüber hinaus den Vorteil, dass vorhandene Förderbandwagen 1 ohne Vakuumhebevorrichtung nachträglich gerüstet werden können. Hierzu wird ein Kragarm 8 an das vorhandene Fahrgestell 9 einfach angeflanscht.

Der Förderbandwagen 1 weist zudem einen Motor 2 auf. Dieser ist vorliegend als mit Gas betriebener Verbrennungsmotor ausgebildet. Entsprechend ist ein nicht dargestellter Gastank vorgesehen. Der erste Motor 2 treibt eine nicht dargestellte hydraulische oder pneumatische Pumpe an. Mit dieser wird ein ebenfalls nicht dargestellter hydraulischer oder pneumatischer zweiter Motor des Förderbands 3 angetrieben. Die Besonderheit besteht nun darin, dass die Pumpe ebenfalls eine nicht dargestellte Vakuumpumpe der Vakuumhebevorrichtung antreibt. Es kann also ein und dieselbe Pumpe bzw. ein und dasselbe von der Pumpe geförderte Fluid verwendet werden, um das Förderband 3 einerseits und die Vakuumhebevorrichtung 5 andererseits anzutreiben.

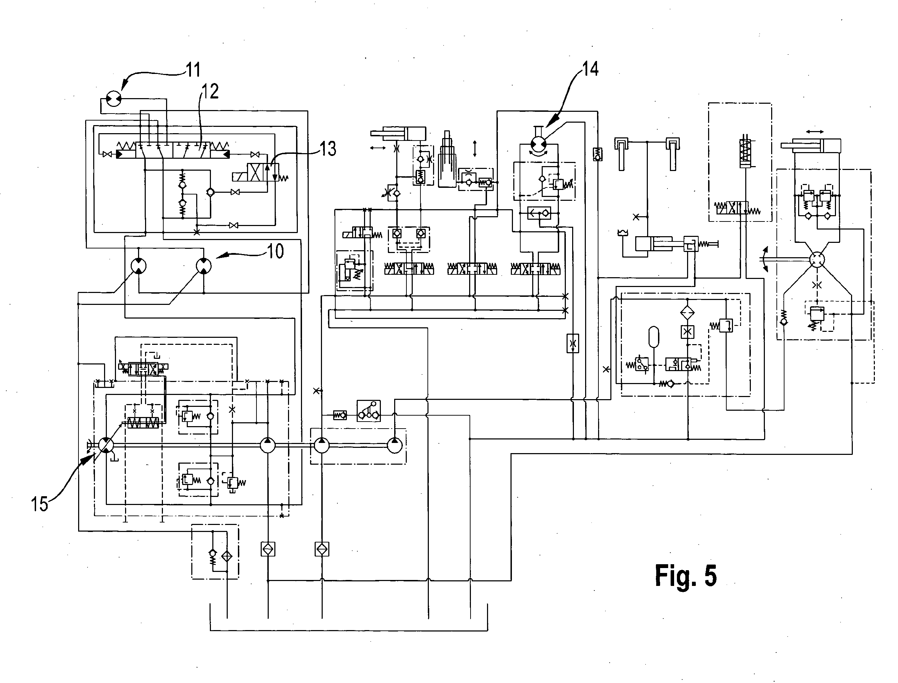

Fig. 5 zeigt den Hydraulikplan des Förderbandwagens 1 gemäß den Figuren 1 bis 4. Ein nicht dargestellter erster Motor treibt eine Pumpe 15 an. Diese fördert eine Hydraulikflüssigkeit. Alternativ könnte auch ein pneumatisches System vorgesehen sein.

Das von der Pumpe 15 geförderte Hydraulikfluid dient dazu, verschiedene Antriebe anzutreiben. Es wird unter anderem ein zweiter Motor 14 angetrieben, welcher wiederum das Förderband 3 antreibt. Es handelt sich bei dem zweiten Motor 14 um einen Hydraulikmotor. Das von der Pumpe 15 geförderte Hydraulikfluid kann zudem für weitere Einrichtungen wie die im rechten Teil der Figur dargestellte Bremsanlage, einen Lenkkraftverstärker und/oder dergleichen verwendet werden.

Das von der Pumpe 15 geförderte Hydraulikfluid wird zusätzlich benutzt, um eine Vakuumpumpe 11 anzutreiben. Diese dient dazu, in der Vakuumhebevorrichtung ein Vakuum, das heißt einen Unterdruck zu erzeugen, der ausreicht, um übliche Frachtstücke mit der Vakuumhebevorrichtung 5 handhaben zu können. Diese haben üblicherweise ein Gewicht bis 40 kg.

Zusätzlich ist ein Fahrantrieb 10 vorgesehen. Hierbei handelt es sich um Hydraulikmotoren, welche beispielsweise als Radnabenmotoren direkt an den anzutreibenden Rädern 7 angeordnet sein können. Der Fahrantrieb 10 wird ebenfalls von dem durch die Pumpe 15 geförderten Fluid angetrieben.

Eine Besonderheit besteht nun darin, dass der Fahrantrieb 10 und die Vakuumpumpe 11 nur alternative betrieben werden können. Hierzu dient ein Zweiwegeventil 12. Dieses ist derart ausgebildet und verschaltet, dass das Hydraulikfluid entweder nur zur Vakuumpumpe 11 oder zum Fahrantrieb 10 geleitet werden kann.

Eine Besonderheit des Zweiwegeventils 12 besteht darin, dass es hydraulisch geschaltet wird. Außerdem wird das Zweiwegeventil 12 in beiden Schaltrichtungen hydraulisch geschaltet. Das heißt, es wird in einer der Schaltrichtungen nicht nur durch die Rückstellkraft einer Feder geschaltet.

Das Zweiwegeventil 12 wird zum Schalten mit Hydraulikfluid beaufschlagt. Die Schaltrichtung, das heißt der Hydraulikdruck an den beiden Eingängen des Zweiwegeventils 12 wird durch ein weiteres Zweiwegeventil 13 gesteuert. Dieses ist elektrisch betätigbar.

Weitere, vorstehend nicht beschriebene Details ergeben sich aus dem Hydraulikplan selbst. Dieser ist aufgrund der Verwendung von Symbolen nach DIN ISO 1219 ohne Weiteres aus sich selbst heraus verständlich.

### Bezugszeichen

- 1: Förderbandwagen
- 2: erster Motor
- 3: Förderband
- 4: Hubeinrichtung
- 5: Vakuumhebevorrichtung
- 6: Fahrerkabine
- 7: Rad
- 8: Kragarm
- 9: Fahrgestell
- 10: Fahrantrieb
- 11: Vakuumpumpe
- 12: Zweiwegeventil
- 13: Zweiwegeventil
- 14: zweiter Motor
- 15: Pumpe

## Patentansprüche

1. Förderbandwagen (1) zum Be- und/oder Entladen insbesondere von Luftfahrzeugen auf einem Flugplatzvorfeld, mit einem ersten Motor (2), insbesondere Verbrennungsmotor, der eine hydraulische oder pneumatische Pumpe (15) antreibt, wobei mittels eines von der Pumpe (15) geförderten Fluids ein hydraulischer oder pneumatischer zweiter Motor (14) für ein Förderband und/oder einen Fahrantrieb (10) des Förderbandwagens antreibbar ist, **gekennzeichnet durch**
eine Unterdruckhebevorrichtung, insbesondere Vakuumhebevorrichtung (5), wobei eine Unterdruckpumpe, insbesondere Vakuumpumpe (11) der Unterdruckhebevorrichtung (5) ebenfalls **durch** das von der Pumpe (15) geförderte Fluid antreibbar ist.

2. Förderbandwagen nach Anspruch 1 **dadurch gekennzeichnet, dass** der Fahrantrieb (10) und die Unterdruckpumpe (11) nur alternativ durch das von der Pumpe (15) geförderte Fluid antreibbar sind.

3. Förderbandwagen nach Anspruch 2, **dadurch gekennzeichnet, dass** ein Mehrwegeventil, insbesondere Zweiwegeventil (12) vorgesehen ist, um entweder den Fahrantrieb (10) oder die Unterdruckpumpe (11) fluidtechnisch mit der Pumpe (15) zu verbinden.

4. Förderbandwagen nach Anspruch 3, **dadurch gekennzeichnet, dass** das Mehrwegeventil (12) hydraulisch oder pneumatisch betätigbar ist.

5. Förderbandwagen nach Anspruch 3 oder 4, **dadurch gekennzeichnet, dass** die hydraulische oder pneumatische Beaufschlagung des Mehrwegeventils (12) durch ein elektrisch betätigbares Mehrwegeventil, insbesondere Zweiwegeventil (13) betätigbar ist.

6. Förderbandwagen nach einem der Ansprüche 3 bis 5, **dadurch gekennzeichnet, dass** das Mehrwegeventil in beiden Schaltrichtungen hydraulisch oder pneumatisch betätigbar ist.

7. Förderbandwagen nach einem der vorangehenden Ansprüche, **dadurch gekennzeichnet, dass** der erste Motor (2) mit Gas betrieben ist.

8. Förderbandwagen nach einem der vorangehenden Ansprüche, **dadurch gekennzeichnet, dass** die Drehzahl der Pumpe (15) je nach anzutreibender Einrichtung insbesondere automatisiert erhöhbar oder verringerbar ist.

9. Förderbandwagen nach einem der vorangehenden Ansprüche, **dadurch gekennzeichnet, dass** die Unterdruckhebevorrichtung an einem Fahrgestell (9) angeordnet ist.

10. Förderbandwagen nach Anspruch 9, **dadurch gekennzeichnet, dass** die Unterdruckhebevorrichtung (15) an einem am Fahrgestell (9) befestigten Kragarm (8) angeordnet ist.

11. Förderbandwagen nach einem der vorangehenden Ansprüche, **dadurch gekennzeichnet, dass** die Unterdruckhebevorrichtung (15) einen Schlauch umfasst, wobei der Schlauch an einem freien Ende ein Mittel zum Anheben einer Last, insbesondere eines Frachtstücks aufweist.

12. Förderbandwagen nach einem der vorangehenden Ansprüche, **dadurch gekennzeichnet, dass** der Schlauch an einem Galgen angeordnet ist.

13. Mobile Arbeitsplattform zur Handhabung von Frachtstücken insbesondere zum Beladen und/oder zur Entnahme von Frachtstücken auf ein bzw. von einem Förderband auf einem Flugplatzvorfeld, mit einem ersten Motor (2) zum Verfahren der Arbeitsplattform, insbesondere Verbrennungsmotor, und einer Unterdruckhebevorrichtung (5), **dadurch gekennzeichnet, dass** eine Unterdruckpumpe (11) der Unterdruckhebevorrichtung (5) ebenfalls durch den ersten Motor (2) antreibbar ist.

14. Mobile Arbeitsplattform nach Anspruch 13, **dadurch gekennzeichnet, dass** der erste Motor (2) einen Generator antreibt, welcher die Bewegungsenergie des Motors (2) in elektrische Energie zum Betrieb der Unterdruckpumpe (11) wandelt.
